# EUROPÄISCHE PATENTSCHRIFT

(11) **EP 0 701 930 B1**
(45) Veröffentlichungstag und Bekanntmachung des Hinweises auf die Patenterteilung: **07.01.1999**
(21) Anmeldenummer: 95110553.5
(22) Anmeldetag: 06.07.1995
(51) Int. Cl.: B60R 21/22, B60R 21/16

(54) **Seitenaufprallschutzeinrichtung für einen Insassen eines Fahrzeuges**
Side collision protection device for vehicle passengers
Dispositif de protection contre le choc latéral pour les occupants de véhicules

(30) Priorität: 26.08.1994 DE 4430412
(43) Veröffentlichungstag der Anmeldung: 20.03.1996
(73) Patentinhaber: Dr.Ing.h.c. F. Porsche Aktiengesellschaft, 70435 Stuttgart (DE)
(72) Erfinder: Heinz, Martin, D-70182 Stuttgart (DE); Schwan, Norbert, D-71229 Leonberg (DE)

(56) Entgegenhaltungen:
- EP-A- 0 593 172
- DE-A- 4 028 344
- US-A- 3 614 127
- PATENT ABSTRACTS OF JAPAN vol. 18 no. 602 (M-1705) & JP-A-06 227348 (TOYOTA MOTOR CORP)

## Beschreibung

Die Erfindung bezieht sich auf eine Seitenaufprallschutzeinrichtung für einen Insassen eines Fahrzeuges gemäß dem Oberbegriff des Patentanspruchs 1.

Die Problematik bei Insassenrückhaltesystemen mit aufblasbaren Gaskissen besteht im allgemeinen darin, daß ein relativ großes Volumen möglichst schnell, d. h. innerhalb Weniger Millisekunden mit Gas aufgeblasen werden muß.

Insbesondere bei Seitenaufprallschutzeinrichtungen stehen für den Aufblasvorgang maximal etwa zehn bis fünfzehn Millisekunden zur Verfügung.

Aus der JP-A-06 227 348 geht eine Seitenaufprallschutzeinrichtung für einen Insassen eines Fahrzeuges hervor, welche mit einem mit einer Fülleinrichtung zusammenwirkenden aufblasbaren Gaskissen versehen ist. Dieses Gaskissen ist mittels eines einzigen angenähten Verbindungsteiles in zwei Kammern unterteilt, wobei am Verbindungsteil mehrere Bohrungen vorgesehen sind. In Abhängigkeit der Bewegung des Insassen bei einem seitlichen Aufprallstoß werden die beiden Kammern durch die Fülleinrichtung zeitlich versetzt zueinander aufgeblasen.

Aufgabe der Erfindung ist es, an einem Gaskissen einer Seitenaufprallschutzeinrichtung solche Vorkehrungen zu treffen, daß bereits wesentlich früher als der maximal zur Verfügung stehenden Aufblaszeit von zehn bis fünfzehn Millisekunden eine Funktionstüchtigkeit des Gaskissens bei einem seitlichen Aufprallstoß gegeben ist.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die definierte Anordnung von Fangbändern innerhalb des Gaskissens ein Mehrkammersystem gebildet wird, wobei die einzelnen Kammern in Abhängigkeit der Bewegung des Insassen bei einem seitlichen Aufprallstoß durch die Fülleinrichtung zeitlich versetzt zueinander aufgeblasen werden.

Vorzugsweise wird die dem Becken-/Brustbereich des Insassen zugekehrte Kammer als erste aufgeblasen, da diese Körperpartien bei einem Seitenaufprall zuerst mit der Tür in Kontakt gelangen.

Das Volumen der ersten Kammer läßt sich in kürzester Zeit befüllen, so daß bereits nach dieser Zeit eine Funktionsfähigkeit der Seitenaufprallschutzeinrichtung gegeben ist.

Nachfolgend an die erste Kammer wird die zweite, dem Kopfbereich des Insassen zugekehrte Kammer des Gaskissens befüllt, wobei das seitliche Verlagern des Kopfes in Richtung Türbrüstung bei einem seitlichen Aufprallstoß zeitversetzt zur Bewegung des Becken-/Brustbereiches des Insassen erfolgt.

Im Ausführungsbeispiel wird das Gaskissen durch in Reihe angeordnete, querverlaufende Fangbänder in zwei übereinanderliegende Kammern unterteilt. Die Fangbänder können jedoch auch ellipsen- bzw. vieleckförmig um die Fülleinrichtung (Gasgenerator) herum angeordnet sein.

Zwischen den Fangbändern sind schmale Bereiche vorgesehen, die durch offene Spalte oder Reißnähte gebildet werden.

Jedes Fangband weist eine relativ große Breite auf, wogegen die dazwischenliegenden durch Spalte oder Reißnähte gebildeten Bereiche wesentlich kleiner sind als die Breite eines Fangbandes. Jedes Fangband ist etwa 1,5 bis 5 mal so breit wie der angrenzende Spalt bzw. die Reißnaht zwischen zwei Fangbändern.

Ein Ausführungsbeispiel der Erfindung ist in der Zeichnung dargestellt und wird im folgenden näher erläutert:

Es zeigt
- Fig. 1: eine Teilseitenansicht eines Personenkraftwagens mit einer aktivierten Seitenaufprallschutzeinrichtung für einen Insassen,
- Fig. 2: eine Seitenansicht einer ersten Ausführungsform eines Gaskissens der Seitenaufprallschutzeinrichtung,
- Fig. 3: eine Ansicht von hinten auf den Insassen und die Seitenaufprallschutzeinrichtung, wobei die dem Becken-/Brustbereich des Insassen zugekehrte Kammer des Gaskissens weitgehend aufgeblasen ist,
- Fig. 4: eine weitere Ansicht von hinten auf den Insassen und die Seitenaufprallschutzeinrichtung, wobei das Gaskissen vollständig aufgeblasen ist und der Kopf des Insassen zur Seite hin bewegt ist,
- Fig. 5: eine Seitenansicht einer zweiten Ausführungsform des Gaskissens einer Seitenaufprallschutzeinrichtung.

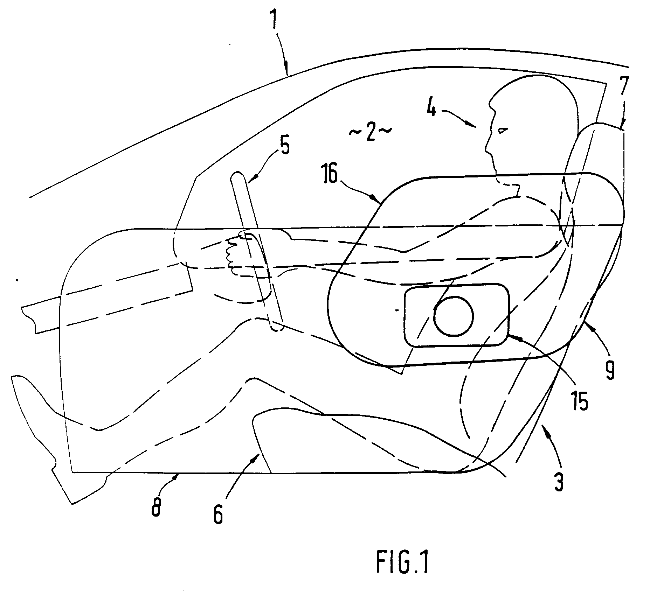

Fig. 1 zeigt einen Teilbereich eines durch einen Personenkraftwagen gebildeten Fahrzeugs 1, wobei innerhalb eines Fahrgastraumes 2 ein Sitz 3 für einen Insassen 4 vorgesehen ist. Der Insasse 4 stützt sich mit seinen Händen an einem Lenkrad 5 ab. Der Sitz 3 setzt sich aus einem am Fahrzeugboden längsverschiebbar angeordneten Sitzteil 6 und einer hinsichtlich ihrer Neigung verstellbaren Rückenlehne 7 zusammen, wobei Sitzteil 6 und Rückenlehne 7 an beiden Längsseiten über nicht näher dargestellte Gelenkbeschläge miteinander verbunden sind.

Zum Schutz des Insassen 4 bei einem seitlichen Aufprallstoß A ist im Bereich einer seitlichen Fahrzeugtür 8 eine Seitenaufprallschutzeinrichtung 9 vorgesehen, die in ihrer Ruhestellung verdeckt innerhalb eines Hohlraumes 10 der Fahrzeugtür 8 angeordnet ist.

Der Hohlraum 10 wird durch ein Türaußenblech 11 und ein Türinnenblech 12 begrenzt und nimmt eine abgesenkte Türfensterscheibe 13 auf.

Benachbart des Türaußenblechs 11 ist innerhalb des Hohlraumes 10 ein längsgerichtetes, rohrförmiges Türversteifungselement 14 angeordnet. Zum Fahrgastraum 2 hin ist das Türinnenblech 12 mit einer nicht näher dargestellten Türinnenverkleidung versehen.

Die Seitenaufprallschutzeinrichtung 9 umfaßt ein mit einer Fülleinrichtung 15 zusammenwirkendes aufblasbares Gaskissen 16. Die Fülleinrichtung 15 wird im Ausführungsbeispiel durch einen Gasgenerator 17 gebildet, der das Gaskissen 16 bei Auslösung durch einen Sensor mit Gas füllt.

In der Ruhestellung erstreckt sich das zusammengefaltete Gaskissen 16 benachbart der Fülleinrichtung 15 innerhalb des Hohlraumes 10 der Fahrzeugtür 8 und ist durch die Türinnenverkleidung zum Fahrgastraum 2 hin abgedeckt.

Das Gaskissen 16 setzt sich aus wenigstens zwei randseitig miteinander verbundenen Teilen 18, 19 zusammen, wobei zwischen den beiden Teilen 18, 19 örtlich Fangbänder 20 angeordnet sind.

An dem dem Gasgenerator 17 zugekehrten Teil 19 des Gaskissens 16 ist örtlich eine Einfüllöffnung 21 vorgesehen. Die Fangbänder 20 begrenzen die Ausdehnung des Gaskissens 16 beim Aufblasen.

Erfindungsgemäß sind innerhalb des Gaskissens 16 vorgesehene Fangbänder 20 so angeordnet, daß das Gaskissen 16 in zumindest zwei getrennte Kammern 22, 23 unterteilt wird, wobei die Kammern 22, 23 in Abhängigkeit der Bewegung des Insassen 4 bei einem seitlichen Aufprallstoß durch die Fülleinrichtung 15 zeitlich versetzt zueinander aufgeblasen werden.

Entsprechend dem Bewegungsablauf des Insassen 4 bei einem seitlichen Aufprallstoß wird zuerst die dem Brust-/Beckenbereich 24 zugekehrte Kammer 22 und nachfolgend die den Kopfbereich 25 zugewandte Kammer 23 mittels der Fülleinrichtung 15 aufgeblasen.

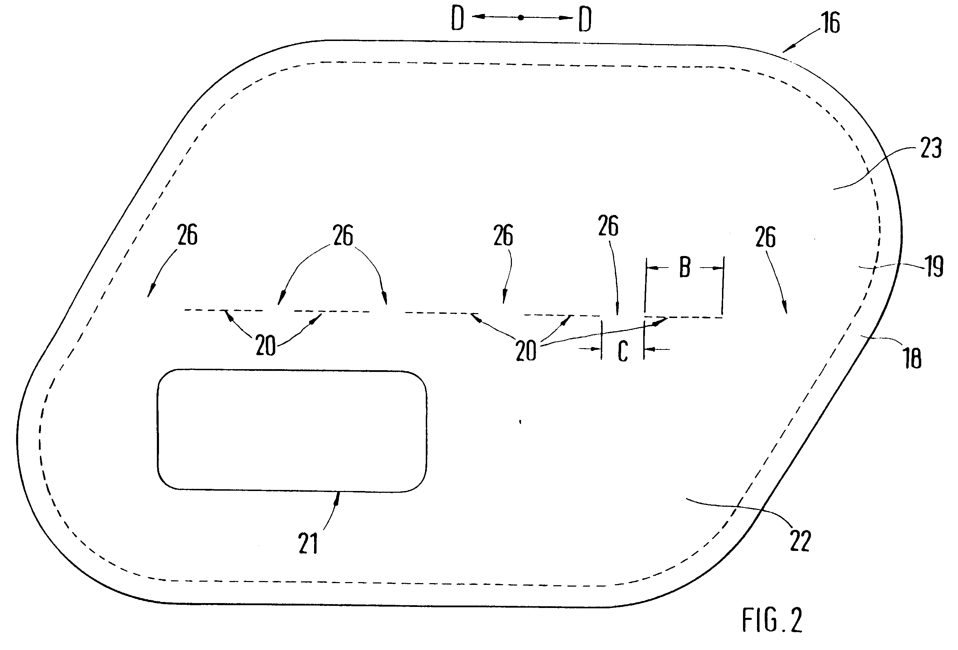

Gemäß den Fig. 2 bis 4 wird das Gaskissen 16 durch die Fangbänder 20 in zwei übereinanderliegende Kammern 22, 23 unterteilt, wobei sich die Fangbänder 20 etwa horizontal ausgerichtet in Fahrzeugquerrichtung erstrecken und mit ihren Enden an den angrenzenden Teilen des Gaskissens 16 befestigt sind. Dies kann durch Nähen, Kleben oder dgl. erfolgen.

In Fahrzeuglängsrichtung D-D gesehen sind die Fangbänder 20 hintereinanderliegend angeordnet, wobei zwischen zwei benachbarten Fangbändern 20 offene Spalte 26 oder nicht näher dargestellte Reißnähte vorgesehen sind. Jedes Fangband 20 weist eine relativ große Breite auf wogegen die dazwischenliegenden Bereiche C zwischen zwei benachbarten Fangbändern 20 wesentlich schmäler sind als die Breite B eines Fangbandes 20.

Vorzugsweise ist jedes Fangband 20 etwa 1,5 bis 5 mal so breit wie der angrenzende dazwischenliegende Bereich C zwischen zwei Fangbändern 20.

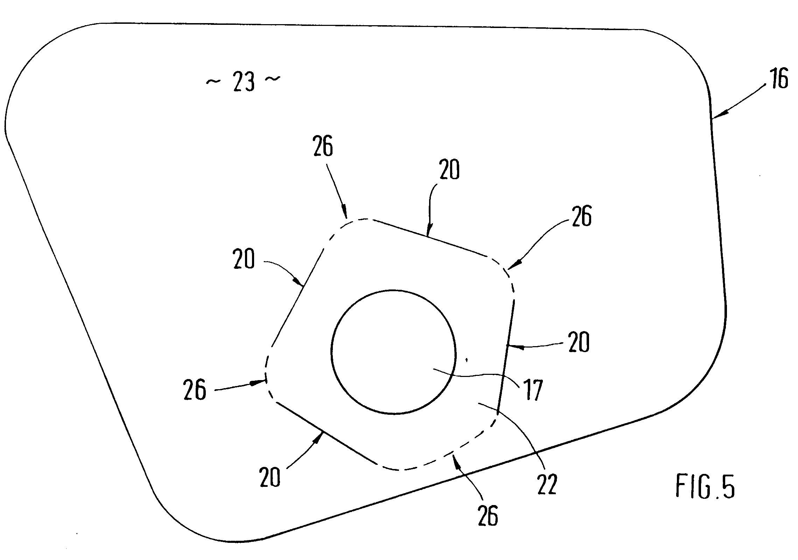

Gemäß Fig. 5 können die Fangbänder 20 auch ellipsen- bzw. vieleckförmig um die Fülleinrichtung 15 herum angerodnet sein.

Funktion der Fangbänder 20 ist es, eine flache Gaskissenkontur zu bewirken. Eine zusätzliche Funktion übernehmen die Fangbänder 20 dadurch, daß sie einen erheblichen Widerstand gegen das aus der Fülleinrichtung 15 (z.B. Gasgenerator 17) strömende Gas darstellen. Ein großer Teil des mit hoher Geschwindigkeit kreisförmig aus der Fülleinrichtung 15 strömenden Gases prallt gegen die relativ breiten Fangbänder 20, da anfangs die Spalte 26 zwischen den Fangbändern 20 abgedeckt sind. Um den Gasgenerator 17 herum wird ein sehr schneller Druckaufbau möglich. Mit steigendem Druck in diesem Teilbereich des Gaskissens 16 und mit abnehmender Gasgeschwindigkeit erfolgt ein kurzzeitiger Druckabbau oder eine Druckkonstanz, in den das Gas in die Außenbereiche bzw. die danebenliegende Kammer 23 abfließt. Erst dann wird das Gaskissen 16 ganz auf Arbeitsdruck aufgeblasen. Versuche haben gezeigt, daß die erste Kammer 22 bereits in kürzester Zeit nach Zündung des Gasgenerators 17 aufgeblasen ist, wogegen das komplette Gaskissen 16 nach ca. 10 Millisekunden auf Arbeitsdruck aufgeblasen ist.

Die Folge dieses temporaren, durch die Fangbänder 20 gebildeten ersten Gaskissenbereiches (erste Kammer) ist, daß darüber der Druckaufbau im Gaskissen 16 geleitet werden kann. Es können bevorzugt Bereiche des Gaskissens 16 rascher auf Druck gebracht werden, d.h. es kann ein frühzeitiger Schutzeffekt unterstellt werden.Zusätzlich hilft der temporare Druckbereich bei der Entfaltung des Gaskissens 16.

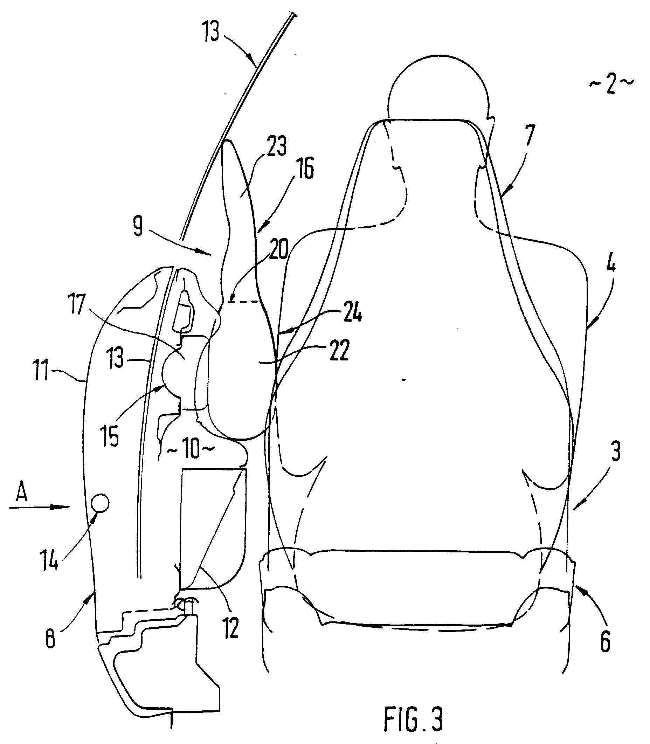

Fig. 3 zeigt eine Zwischenstellung des Gaskissens 16, in der die dem Brust-/Beckenbereich 24 zugekehrte erste Kammer 22 bereits funktionsfähig aufgeblasen ist, während die angrenzende zweite Kammer 23 nur geringfügig mit Gas gefüllt ist.

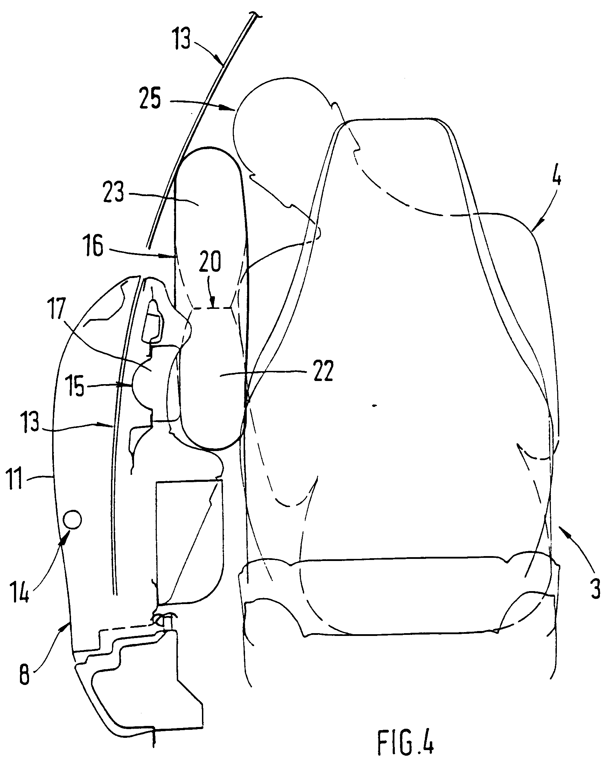

In Fig. 4 sind beide Kammern 22, 23 des Gaskissens 16 auf Arbeitsdruck aufgeblasen.

## Patentansprüche

1. Seitenaufprallschutzeinrichtung (9) für einen Insassen (4) eines Fahrzeuges (1) mit einem mit einer Fülleinrichtung (15) zusammenwirkenden aufblasbaren Gaskissen (16), wobei innerhalb des Gaskissens (16) definiert angeordnete Mittel vorgesehen sind, die das Gaskissen (16) in zumindest zwei Kammern (22, 23) unterteilen, wobei die Kammern (22, 23) in Abhängigkeit der Bewegung des Insassen (4) bei einem seitlichen Aufprallstoß durch die Fülleinrichtung (15) zeitlich versetzt zueinander aufgeblasen werden, **dadurch gekennzeichnet,** daß die beiden Kammern (22, 23) durch mehrere aneinandergesetzte, innerhalb des Gaskissens (16) definiert angeordnete Fangbänder (20) voneinander unterteilt sind, wobei zwischen zwei benachbarten Fangbändern (20) offene Spalte (26) oder Reißnähte vorgesehen sind und daß jedes Fangband (20) eine relativ große Breite aufweist, wogegen die dazwischenliegenden Bereiche (C') zwischen zwei benachbarten Fangbändern (20) wesentlich schmäler sind als die Breite (B) eines Fangbandes (20).

2. Seitenaufprallschutzeinrichtung nach Anspruch 1, **dadurch gekennzeichnet,** daß die den Brust-/Beckenbereich (24) des Insassen (4) abdeckende erste Kammer (22) des Gaskissens (16) zuerst aufgeblasen wird.

3. Seitenaufprallschutzeinrichtung nach den Ansprüchen 1 und 2, **dadurch gekennzeichnet,** daß die dem Kopfbereich (25) des Insassen (4) zugeordnete zweite Kammer (23) des Gaskissens (16) zeitverzögert zur ersten Kammer (22) aufgeblasen wird.

4. Seitenaufprallschutzeinrichtung nach den Ansprüchen 1 bis 3, **dadurch gekennzeichnet,** daß die beiden Kammern (22, 23) übereinanderliegend angeordnet sind, wobei die die beiden Kammern (22, 23) begrenzenden Fangbänder (20) in Fahrzeuglängsrichtung hintereinanderliegend mit Abstand zueinander angeordnet und etwa horizontal ausgerichtet sind.

5. Seitenaufprallschutzeinrichtung nach Anspruch 1, **dadurch gekennzeichnet,** daß jedes Fangband (20) etwa 1,5 bis 5 mal so breit ist wie der angrenzende dazwischenliegende Bereich (C) zwischen zwei Fangbändern (20).

## Claims

1. A side-impact protection device (9) for an occupant (4) of a vehicle (1) with an inflatable gas cushion (16) cooperating with a filling device (15), wherein means which subdivide the gas cushion (16) into at least two chambers (22, 23) and which are arranged in a defined manner inside the gas cushion (16) are provided, and wherein the chambers (22, 23) are inflated as a function of the movement of the occupant (4) in the event of a side impact by the filling device (15) with a time lag horn each other, **characterized in that** the two chambers (22, 23) are divided from each other by a plurality of mutually adjacent limiting straps (20) arranged in a defined manner inside the gas cushion (16), wherein open gaps (26) or deployment control seams are provided between two adjacent limiting straps (20), and each limiting strap (20) has a relatively large width, whereas the interposed areas (**C'**) between two adjacent limiting straps (20) are substantially narrower than the width (**B**) of a limiting strap (20).

2. A side-impact protection device according to Claim 1, **characterized in that** the first chamber (22) of the gas cushion (16) covering the chest/pelvis area (24) of the occupant (4) is inflated first.

3. A side-impact protection device according to Claims 1 and 2, **characterized in that** the second chamber (23) of the gas cushion (16) associated with the head area (25) of the occupant (4) is inflated with a time delay after the first chamber (22).

4. A side-impact protection device according to Claims 1 to 3, **characterized in that** the two chambers (22, 23) are arranged one above the other, wherein the limiting straps (20) bounding the two chambers (22, 23) are arranged mutually spaced one behind the other in the longitudinal direction of the vehicle and are orientated substantially horizontally.

5. A side-impact protection device according to Claim 1, **characterized in that** each limiting strap (20) is substantially 1·5 to 5 times as wide as the adjacent interposed area (**C**) between two limiting straps (20).

## Revendications

1. Dispositif (9) de protection contre un choc latéral pour un passager (4) d'un véhicule (1), comportant un coussin de sécurité (16) gonflable, qui coopère avec un dispositif de remplissage (15)et à l'intérieur duquel sont prévus des moyens disposés de manière définie, qui partagent le coussin de sécurité (16) en au moins deux chambres (22, 23), les chambres (22, 23) étant gonflées par le dispositif de remplissage (15), de manière décalée dans le temps l'une par rapport à l'autre, en fonction du mouvement du passager (4) en cas de choc latéral, caractérisé en ce que les deux chambres (22, 23) sont séparées l'une de l'autre par plusieurs bandes de retenue (20), disposées de manière définie à l'intérieur du coussin de sécurité (16), des fentes (26) ouvertes ou des coutures destinées à la rupture étant prévues entre deux bandes de retenue (20) voisines, et en ce que chaque bande de retenue(20) présente une largeur relativement grande, tandis que les zones (C) situées entre deux bandes de retenue (20) voisines sont sensiblement plus étroites que la largeur (B) d'une bande de retenue (20).

2. Dispositif de protection contre un choc latéral selon la revendication 1, caractérisé en ce que la première chambre (22) du coussin de sécurité (16), recouvrant la région de la poitrine et du bassin (24) du passager (4), est gonflée en premier.

3. Dispositif de protection contre un choc latéral selon les revendications 1 et 2, caractérisé en ce que la deuxième chambre (23) du coussin de sécurité (16), associée à la région de la tête (25) du passager (4), est gonflée à retardement par rapport à la première chambre (22).

4. Dispositif de protection contre un choc latéral selon les revendications 1 à 3, caractérisé en ce que les deux chambres (22, 23) sont disposées l'une au-dessus de l'autre, les bandes de retenue (20) délimitant les deux chambres (22, 23) étant disposées de façon à être espacées les unes derrière les autres dans la direction longitudinale du véhicule et étant orientées à peu près horizontalement.

5. Dispositif de protection contre un choc latéral selon la revendication 1, caractérisé en ce que chaque bande de retenue (20) est d'environ 1,5 à 5 fois plus large que la zone (C) adjacente située entre deux bandes de retenue (20).
